(19) Europäisches Patentamt
European Patent Office
Office européen des brevets

(11) **EP 3 376 687 A1**

(12) **EUROPEAN PATENT APPLICATION**

(43) Date of publication:
**19.09.2018 Bulletin 2018/38**

(51) Int Cl.:
***H04B 10/079*** (2013.01)

(21) Application number: **17161701.2**

(22) Date of filing: **17.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Xieon Networks S.à r.l.
2633 Senningerberg (LU)**

(72) Inventors:
• **Slovak, Juraj
81825 München (DE)**

• **Schairer, Wolfgang
85716 Unterschleißheim (DE)**
• **Herrmann, Maximilian
80809 München (DE)**
• **Torrengo, Enrico
1500-611 Lisboa (PT)**

(74) Representative: **Lucke, Andreas
Boehmert & Boehmert
Anwaltspartnerschaft mbB
Pettenkoferstrasse 22
80336 München (DE)**

(54) **DETERMINATION OF CHANNEL OSNR AND CHANNEL OSNR MARGIN AT REAL NETWORK CONDITIONS**

(57) A method of determining contributions of different sources of signal degradation for optical signals transmitted over an optical link in an optical transmission system, comprising measuring a performance value (P) of a signal transmission on said optical link, deriving, from the performance value, an auxiliary noise power value $(P_N)$ based on a predetermined relationship between the performance value (P) and the auxiliary noise power value $(P_N)$, wherein the auxiliary noise power value $(P_N)$ comprises contributions of amplified spontaneous emission power $(P_A)$ generated on the optical link and a link-related equivalent noise power contributions $(P_L)$ representing other sources of signal degradation upon transmission on the optical link, measuring or deriving an OSNR-related value (Q) for the signal transmission on the optical link, wherein the OSNR-related value (Q) corresponds to or is at least indicative of an actual OSNR on the optical link, and distinguishing, based on the auxiliary noise power value $(P_N)$ and on the OSNR-related value (Q) between noise power contributions of amplified spontaneous emission and link-related equivalent noise power contributions.

EP 3 376 687 A1

Fig. 2

**Description**

FIELD OF THE INVENTION

The present invention is in the field of fiber-optic communication. In particular, the present invention relates to a method for determining an optical signal-to-noise ratio (OSNR) and an OSNR margin for a given optical link in an optical transmission network and a corresponding apparatus configured for determining an OSNR margin for a given optical link in an optical transmission network.

BACKGROUND OF THE INVENTION

A typical optical transmission network comprises a plurality of nodes that are mutually connected by optical links. Each node of an optical transmission network may comprise one or more optical components and the optical links mutually connecting the nodes usually are optical fibers. A key aspect of optical network communication is guaranteeing that optical data may be transmitted between the nodes over the optical links of an optical transmission network with a degree of quality allowing for error free data processing at a receiving end of the corresponding optical link in spite of any possible sources of impairment or signal degradation that may affect the transmission of an optical signal.

In optical networks using wavelength-division multiplexing (WDM), optical signals are transmitted by means of lightwaves having different wavelengths. The set of optical signals is often also referred to as WDM signals or multichannel optical signal. However, not all power transmitted over an optical link encodes meaningful information. The physics of the light sources, optical links, and of the optical and electrical devices used in an optical transmission network inherently induce additional uncontrolled optical power that mixes with the signal power encoding meaningful information and renders the decoding thereof at a receiving end more difficult. This uncontrolled optical power is generally referred to as "optical noise". In the wavelength distribution of a multichannel optical signal, said optical noise appears as a broadband noise floor, whereas the optical channels appear in the form of localized power peaks raising up from this noise floor, such that each local maximum of the optical signal corresponds to a channel being used for transmitting meaningful information to be decoded at a receiving end of a link. In the following, the term optical noise will be used for any noise contribution that might be detected in the optical power density spectrum. In other words, these noise terms would in principle be detectable for an ideal optical spectrum analyzer.

The impact of optical noise on the transmission of an optical signal is usually characterized by the ratio of meaningful signal power to noise power. A so-called optical signal-to-noise ratio (OSNR) is defined for this purpose as the ratio of power of a transmitted optical signal over the optical noise power affecting said optical signal in an optical channel. More precisely, the power of the optical signal is related to the optical noise power within a predefined wavelength range centered around the wavelength of the channel. Typically, a wavelength range of 0.1 nm width is chosen, but any other number such as 1 nm could also be used since the curve representing the power density of the noise versus wavelength is quite smooth.

A major source of optical noise in optical transmission networks making use of optical amplifiers is amplified spontaneous emission (ASE) caused by spontaneous emission of photons in a gain medium and further amplification by stimulated emission. Such uncontrolled contribution to the power signal may be measured by means of an optical spectrum analyzer (OSA).

The degree to which information encoded in an optical signal is incorrectly detected at a receiving end of an optical link is quantified by the so-called "bit error rate" (BER), which is the ratio of the number of incorrectly received bits over the number of transmitted bits. Commonly, the bit error rate is determined based on the number of erroneous decisions before potential correction by any feedforward error correction (FEC) mechanism. This kind of BER is typically referenced to as preFEC BER.

The robustness of the optical channels operated in an optical transmission network or optical system may be determined by a so-called residual margin given by the difference between the OSNR of an optical signal at a receiving end of an optical link and the minimum OSNR required at said receiving end for error free data transmission or for data processing with a bit error rate below a predefined threshold. Channels are usually assigned a minimum residual margin in order to ensure the fulfilment of the requirements for error free optical signal reception over the expected lifetime of an optical link taking into account the foreseen system degradations such as increase of span loss, component aging or increased non-linear channel interactions when adding further channels for example.

Data transmission is typically considered to be error free if the bit error rate for the finally detected data stream is below $10^{-12}$, but for some applications also other thresholds may be used. In case error correction is implemented, the BER after error correction needs to be equal to or smaller than this value. Modern receivers allow error free data transmission even if the preFEC BER is around $10^{-2}$.

Known solutions for guaranteeing error free data transmission are based on the assumption of worst-case conditions, according to which the optical network is typically installed with significant residual margin. In other words, the OSNR at begin of life (BOL) might be significantly larger than required in order to be prepared to cope with future performance degradation. However, while the residual margin must be high enough to ensure operability of the optical transmission network over the entire lifetime thereof, an unnecessarily high residual margin may unnecessarily limit the reach of the optical path or may require to install costly equipment, which finally leads to a waste of resources. It is therefore crucial to achieve a balanced amount of residual margin that is robust enough to guarantee error free transmission of optical signals over the entire life or operation time of an optical transmission network but at the same time is kept as low as possible in order to avoid additional network costs arising from the necessity of further amplification points or costly electrical regeneration of the data signals.

Further, since the optical properties of optical fibers as well as the aforementioned sources of impairment are not only frequency dependent but further exposed to statistical variations, it is very difficult to predict with certainty the real performance conditions of an optical channel in an optical transmission network. In addition, modifications of the channel structure (i.e. channel number, spectral location, inter-channel distance, etc) or of the network structure (i.e. number of optical components, location of the components in the network, etc) of an optical transmission network also have a direct impact on the quality of signal transmission and hence on the residual margin.

Optical signals do however not only suffer from attenuation and optical noise when being transmitted between nodes over the optical links of an optical transmission network but also from other unwanted sources of signal disturbance, which may not be detected by direct measurement by using e.g. an OSA. This is for example the case of non-linear effects like cross-phase modulation (XPM), self-phase modulation (SPM), four-wave-mixing (FWM), as well as of linear impairments such as chromatic dispersion (CD), polarization-mode dispersion (PMD), and polarization-dependent loss (PDL), which may in combination cause signal degradation to the extent of preventing information encoded in an optical signal from being correctly received at a receiving end of an optical link. These effects do, contrary to ASE, not manifest in the form of actual noise power, and may hence not be detected by direct power measurement e.g. using an OSA.

Therefore, an estimation of signal transmission quality based solely on OSNR runs the risk of not accounting for the additional signal degradation effects due to the aforesaid effects other than ASE and hence lead to wrong estimation of the conditions actually required for guaranteeing a desired degree of transmission quality, e.g. a desired BER.

In WO 2013/026469 A1, a method is disclosed for determining a performance parameter so as to compare it to a predefined end-of-life performance condition in order to trigger proper corrective counteractions in case the fulfillment of the predefined performance condition before reach of the end-of-life time is jeopardized by signal deterioration. However, no details are given therein as to how to correctly estimate an optical signal-to-noise ratio margin during network operation while accounting for the different technical problems mentioned above.

In view of this, there is room for technical improvements in the determination of an OSNR margin for a given optical link in an optical transmission network.

## SUMMARY OF THE INVENTION

The problem underlying the invention is to provide a method and an apparatus for determining contributions of different sources of signal degradation for optical signals transmitted over an optical link in an optical transmission network for guaranteeing successful data transmission taking into account link-related sources of signal degradation not directly captured by the OSNR. This problem is solved by a method according to claim 1 and by an apparatus according to claim number 9. Herein, an OSNR margin is understood as the difference between an actual OSNR of the optical signal after transmission over said optical link and the minimal OSNR that still ensures successful data transmission on said optical link, wherein "successful" may in particular refer to a predetermined minimum degree of error free data transmission, which may in some instances be given by a predetermined bit error rate (BER) threshold. Note that although strictly speaking, the so-called bit error rate is rather a bit error ratio, the commonly used term will be used in the following. Preferable embodiments of the invention are described in the dependent claims.

The method of the invention comprises a step of measuring a performance value of a signal transmission on the optical link. The performance value should be understood herein in a broad manner to refer to any parameter or magnitude suitable for quantifying the performance of the optical link during signal transmission, i.e. the quality of said signal transmission. For instance, the performance value may in some embodiments correspond to a BER value indicative of the quality of signal transmission on said optical link, in particular to a pre forward error correction (preFEC) BER.

The method further comprises a step of deriving, from the performance value, an auxiliary noise power value based on a predetermined relationship between the performance value and the auxiliary noise power value, wherein the auxiliary noise power value comprises contributions of amplified spontaneous emission (ASE) power generated on the optical link and a link-related equivalent noise power contribution representing other sources of signal degradation upon transmission on the optical link. The auxiliary noise power value hence represents a total noise power contribution resulting from the noise power contribution due to ASE and other sources of signal degradation (i.e. other than ASE) that would normally not manifest in the form of optical noise, which may not be detected by direct measurement by using e.g. an OSA. These may for instance comprise cross-phase modulation (XPM), self-phase modulation (SPM), four-wave-mixing (FWM), polarization-mode dispersion (PMD), chromatic dispersion (CD), and polarization-dependent loss (PDL) among others.

Thus, the auxiliary noise power value may be defined as a value $P_N$ resulting from the sum of all possible sources of signal degradation, that is, of the noise power contribution due to ASE $P_A$ and an equivalent noise power contribution due to all other link-related sources of signal degradation $P_L$:

$$P_N = \sum P_i = P_A + P_L$$

where $P_i$ are all possible sources of signal degradation, including "real" optical noise power (e.g. due to ASE) and "equivalent" noise power accounting for said link-related sources of signal degradation. Thus, $P_N$ provides a measure of the optical noise power that would cause the same degree of signal degradation as the actual combination of optical noise and link-related sources of signal degradation if real optical noise was the only source of signal degradation. This relies on the assumption that all sources of signal degradation may be quantified as an equivalent noise power. The validity of this assumption for non-linear effects has been shown by P. Poggiolini in his seminal paper "The GN Model of Non-Linear Propagation in Uncompensated Coherent Optical Systems", Journal of Lightwave Technology, vol. 30, No. 24, Dec.15, 2012. For other effects, such as narrowband filtering, PMD, PDL, and CD, the validity of the model has been confirmed by experiments performed by the inventors.

The auxiliary noise power value is determined from the measured performance value based on a predetermined relationship between the performance value and the auxiliary noise power value that allows mapping the measured performance value to a corresponding auxiliary noise power value. Said predetermined relationship may for instance be related to a mathematical function entailing the dependence of the performance value on the auxiliary noise power value, i.e. on the total noise power contribution affecting signal transmission on the optical link, but it might also be defined by entries of a look-up table.

For example, if the performance value corresponds to a preFEC BER measurement $P_{BER}$, the predetermined relationship may correspond to a function entailing the dependence of the BER on a total effective noise ratio at a receiver located at a receiving end of the optical link given by the ratio of the power $P_S$ of the signal transmitted on the optical link over the auxiliary noise power value:

$$P_{BER} = F\left(\frac{P_S}{P_N}\right)$$

Knowledge of the function F and of the signal power $P_S$ hence allows inferring the value of the auxiliary noise power value $P_N$ from the preFEC BER measurement $P_{BER}$. Note that the predetermined relationship may be defined in a variety of ways but shall always be a function of the total signal power $P_S$ and of the auxiliary noise power value $P_N$.

The method further comprises a step of measuring or deriving an OSNR-related value for signal transmission on the optical link, wherein the OSNR-related value corresponds to or is at least indicative of an actual OSNR on the optical link. "Actual OSNR" refers herein to the OSNR on the optical link due to ASE, since this is the OSNR due to ASE that may be measured, for instance by means of an optical spectrum analyzer (OSA). The actual OSNR as referred to herein is given by

$$OSNR = 10\log_{10}\left(\frac{P_S}{P_A}\right).$$

The OSNR-related value may correspond to a directly measured absolute OSNR value on the optical link if such a measurement is possible, i.e. if the conditions are given and the corresponding equipment, such as an OSA, is available. If direct measurement of an absolute OSNR value is not possible, the OSNR-related value may be obtained by deriving it from other measured or otherwise available values, like for instance parameters that may be related to the actual OSNR on the optical link, based for instance on a known or obtainable relationship.

The method further comprises a step of distinguishing, based on the auxiliary noise power value and on the OSNR-related value, between noise power contributions of ASE and link-related equivalent noise power contributions. This allows identifying to what extent the signal degradation experienced by the optical signal transmitted over the optical link is due to real optical noise related to ASE generated in the optical link and to what extent said signal degradation is instead due to link-related sources of signal degradation other than ASE. The method of the invention allows separately identifying said sources of signal degradation by means of the assumption that the link-related sources, which may not be directly detected from an analysis of the optical spectrum of the optical signal (e.g. by means of an OSA), may conceptually be treated as a link-related equivalent noise power contribution. This enables a more accurate analysis of the sources of signal degradation affecting the transmission of the optical signal over the optical link and allows a better estimation of a residual margin, e.g. of an OSNR margin, to be set for signal transmission over the optical link.

In a preferred embodiment of the invention, the step of distinguishing between noise power contributions of amplified spontaneous emission and link-related equivalent noise power contributions may be or at least comprise a step of determining the link-related equivalent noise power contribution based on the auxiliary noise power value and on the OSNR-related value. In related embodiments, however, one or more parameters directly reflecting said link-related equivalent noise power contribution may be determined instead of the link-related equivalent noise power contribution itself. This would also be an example of said distinguishing between noise power contributions of amplified spontaneous emission and link-related equivalent noise power contributions. In other words, it is not always necessary that the link-related equivalent noise power contribution is explicitly determined, as long as parameters are determined that reflect or represent the same.

According to a preferred embodiment of the invention, the method further comprises a step of determining, based on the auxiliary noise power value and on the OSNR-related value, a required OSNR-related value that corresponds to or is at least indicative of a minimal OSNR that still ensures successful data transmission on the optical link in view of said other sources of signal degradation represented by the link-related equivalent noise power contribution. The minimal OSNR is related to a maximal noise power contribution due to ASE, $P_A^{max}$, wherein said maximal noise power contribution due to ASE is given by the difference between a maximal auxiliary noise power, $P_N^{max}$, and the link-related equivalent power contribution on the optical link $P_L$:

$$P_A^{max} = P_N^{max} - P_L,$$

wherein the maximal auxiliary noise power $P_N^{max}$ may be related to a predetermined performance value threshold via the predetermined relationship.

For instance, if the predetermined performance value corresponds to a preFEC-BER value, said performance value threshold may be chosen as given by a maximal preFEC-BER for the transmission of the optical signal on the optical link, and the predetermined maximal auxiliary noise power $P_N^{max}$ may then be given by the auxiliary noise power corresponding to said performance value threshold according to the predetermined relationship. The link-related equivalent noise power contribution on the optical link $P_L$ can be obtained from the difference between the auxiliary noise power value $P_N$ determined from the measured performance value and the noise power contribution due to ASE, $P_A$, determined from the measured or derived OSNR-related value. Note that such a step of obtaining the link-related equivalent noise power contribution on the optical link $P_L$ is one example of "distinguishing", based on the auxiliary noise power value ($P_N$) and on the OSNR-related value, between noise power contributions of amplified spontaneous emission and link-related equivalent noise power contributions. The link-related equivalent noise power contribution on the optical link $P_L$ reflects the noise-equivalent effects of sources of signal degradation other than ASE affecting signal transmission on the optical link. Since the auxiliary noise power value represented by $P_N^{max}$ includes the signal degradation effects of all possible noise sources, the difference between said maximal auxiliary noise power $P_N^{max}$ and said link-related equivalent power contribution on the optical link $P_L$ amounts to the maximal noise power contribution due to ASE, to which the minimal OSNR and hence the required OSNR-related value, is intrinsically related.

According to this embodiment, the method further comprises a step of determining the OSNR margin by subtracting the required OSNR from the actual OSNR indicated by the OSNR-related value. "Required" OSNR refers herein to the minimum OSNR value that still ensures error free transmission of the optical signal over the optical link. Of course, larger values of the OSNR also allow for error free transmission. The actual OSNR may be obtained from the OSNR-related value, that is, either by direct measurement if the OSNR-related value corresponds to the OSNR, or by inferring the OSNR from the OSNR-related value, if the OSNR-related value is indicative of the OSNR on the optical link. This way, the method of the invention allows estimating whether error free data transmission is guaranteed at future instances under present network and signal conditions based on measurements corresponding or being at least indicative of OSNR while taking into account link-specific sources of signal degradation other than ASE, which could not be directly discerned from the OSNR.

The residual margin given by the difference between the calculated actual OSNR and the required OSNR of the signal may be determined at the receiver after transmission over the optical link (i.e. including OSNR reduction due to link impairments). With this method, changes in the residual margin due to new conditions in the optical link (e.g. changes in the span losses and/or link impairments) can be quantified with additional information about the source of the effects that lead to the changes in the residual margin. Furthermore, determination of the residual margin by means of optical models enables prediction of the channel residual margin under link conditions that are different to the actual link conditions.

This allows establishing a relationship between a predetermined performance value threshold, for example a predetermined maximum preFEC-BER, and a corresponding measurable OSNR in spite of the fact that no OSNR measurement would typically reflect the effects of sources of signal degradation other than ASE, like for example nonlinearities, which are link-specific and difficult to measure in an precise manner otherwise. This provides for a more accurate estimation of the OSNR margin that may ensure error free data transmission while guaranteeing an efficient use of network resources.

According to a preferred embodiment of the invention, the predetermined relationship between the auxiliary noise power value and the performance value is obtainable or obtained from a back-to-back ($B_2B$) measurement. In a $B_2B$ measurement the transmitter and receiver are characterized with respect to ASE noise with negligible linear or nonlinear waveform distortions. Preferably, the transmitter is connected for this characterization to a receiver with a fiber whose length is smaller than 100 m. This B2B configuration may be used to provide the transmitter-receiver pair with artificially generated optical noise in a controlled manner and to measure the effect this has on the performance. In this case, the added artificially generated noise is the only source of noise and hence corresponds to the resulting auxiliary noise power value. Since in the $B_2B$ configuration, no link is present, there are obviously no link-related signal distortion effects. In the B2B configuration, a function entailing the dependence of preFEC BER on the auxiliary noise power value $P_N$ may be obtained for a transmitter-receiver pair.

According to a preferred embodiment of the invention, the predetermined relationship between the performance value and the auxiliary noise power value is an equipment specific relationship that is obtainable or obtained before operating a transmitter and/or a receiver in said optical link. This allows obtaining a predetermined relationship for such a transmitter and/or receiver before their usage in an optical transmission network such that the predetermined relationship reflects the intrinsic properties of the transmitter and/or receiver. The predetermined relationship may for instance be obtained during manufacture of a transmitter and/or a receiver as used in the optical link. This allows using information related to actually occurring noise in the optical link once the transmitter and/or receiver is being used in an optical transmission network to single out the link-related equivalent noise power contribution.

In a preferred embodiment of the invention, the OSNR-related value is determined based on at least two different performance values measured for different operating conditions on the same optical link. This allows determining the actual OSNR on the optical link even in a situation in which direct measurement of OSNR is not possible. According to this embodiment, a first performance value and a second performance value may be measured. First and second auxiliary noise power values may then be derived from the first and second performance values based on the predetermined relationship. An OSNR-related value for the signal transmission of the optical link can then be derived from the relationship between the first and second auxiliary noise power values, both of which being intrinsically related to the actual OSNR at the respective operating conditions.

Said different operating conditions corresponding for example to different signal transmission powers on the optical link may be created by adjusting the gain of one or more amplifiers connected to the optical link. Note that the term "amplifier" has a broad meaning and can relate to a dedicated fiber amplifier, such as an EDFA, but can also refer to components including optical amplifiers, such as a photonic cross-connect, as explained in more detail below. Further, the aforesaid gain adjustment may be applied to more than one amplifiers in such a way that the gain changes of each of said more than one amplifiers are mutually compensated such that the change in signal transmission power is restricted to the optical link in question and does not extend to further optical links that may be connected to said optical link through the one or more amplifiers.

This allows determining an OSNR margin correctly accounting for link-specific noise power contributions other than ASE even in situations in which direct measurement of absolute OSNR values is not possible. Instead, the OSNR margin is determined based on the variation experienced by the determined OSNR-related values under a transition between the aforesaid different operating conditions on the same optical link. Typically, it can be assumed that the equivalent noise power due to signal degradation effects other than ASE is the same in said different operating conditions. The validity of this assumption has been assumed and confirmed by the inventors. This being the case, the variations in OSNR is solely due to the different signal powers, since the link-related equivalent noise power contributions are identical in both cases. Thus, the actual OSNR can be calculated simply from relative variations of the OSNR that do not need to be measured directly, but that can be derived from measurement parameters, i.e. measured power levels, for the two operating conditions. Further, the calculation may be made more precise by considering expected changes in the link-related equivalent noise power contribution with changing operating conditions, e.g. by using models describing the effect of nonlinear fiber effects.

In preferred embodiments of the invention, the method further comprises determining from the OSNR-related value an actual OSNR corresponding to at least one of the operating conditions at which the two different performance values are respectively measured. This allows determining the OSNR and hence replacing or eliminating measurement equipment that would be required for direct OSNR measurement. Furthermore, the method allows determining the OSNR in scenarios in which a direct measurement of the OSNR is difficult or even impossible.

According to preferred embodiments of the invention, said different operating conditions correspond to different signal transmission powers on the optical link. Thus, the aforesaid different operating conditions may be provided in a simple manner by adjusting the signal transmission power in the optical link, for instance by properly adjusting any amplification means affecting signal transmission on the optical link. Preferably, only the power of the considered channel is changed in order to minimize variations of the link-related equivalent noise power contributions between the first and second operating conditions under consideration. This can for example be achieved through a channel-specific adjustment of the attenuation experienced by the channel in photonic cross-connects traversed by the channel across the link.

The inventors have verified the assumption that the contribution to the auxiliary noise power due to effects other than ASE be the same in the operating conditions differing in signal power is well justified in many cases. Note that this does not exclude the applicability of said assumption to other ways of creating different operating conditions.

In a preferred embodiment of the invention, the method further comprises determining from the OSNR-related value determined based on said at least two different performance values for different operating conditions, an actual OSNR corresponding to the operating conditions at which one of the at least two different performance values is measured. This way, an absolute OSNR measurement may be indirectly obtained from the measurement of said at least two different performance values even in cases in which direct OSNR measurement is not possible.

In preferred embodiments of the invention, the method further includes changing the signal transmission power on the optical link in order to provide said different operating conditions.

Margin calculation according to the invention requires information about the actual OSNR-related value, which can be obtained from direct measurements, performance measurements for different operating conditions or link modelling. The first two options have been addressed above. According to a preferred embodiment of the invention following the third option, the method further includes calculating the ASE at the receiver from the power distribution and from other characteristics of components of the optical transmission network along a given optical path, which may comprise one or more optical links. An optical model may consider a reduction of the OSNR of the optical signal due to attenuation and to optical noise across the optical link. As input for the OSNR calculation, data from measuring devices installed in the optical network along the optical link may be used. If the data from the measuring devices is not available or not complete, reference or typical characteristics of optical devices can be used.

In a preferred embodiment of the invention, the method further comprises calculating the impact of linear and nonlinear impairments on the signal transmitted over the optical link based on optical models. As input for the calculation of link impairments, data from measuring devices installed along optical link may be used. With this method the impact of link impairments can be translated into link-related equivalent noise power contribution on the optical link (i.e. OSNR reduction caused by link impairments). The corresponding noise power contribution from ASE to the auxiliary noise power value may be calculated based on reference or typical characteristics of the involved optical devices.

According to a preferred embodiment of the invention, the method further comprises decreasing the signal transmission power on the optical link if the OSNR margin is larger than a predefined margin value. This way, resources devoted to maintaining a signal power exceeding the signal power necessary for error free transmission of the optical signal as indicated by the OSNR margin may be saved.

In a preferred embodiment of the invention, the method further comprises increasing the signal transmission power on the optical link if the OSNR margin is smaller than a predefined margin value. This allows reacting to a situation in which the current signal power would not guarantee error free transmission of the optical signal as indicated by the OSNR margin such that the OSNR on the optical link be increased in order to guarantee error free transmission.

In preferred embodiments of the invention, the performance value corresponds to a value of a pre-forward error correction (FEC) bit error rate (BER) on the optical link.

In preferred embodiments of the invention, the OSNR-related value is determined by direct measurement of the OSNR on the optical link or calculated from link modelling. In such cases, like for example when direct measurement of OSNR by means of an OSA is possible, the OSNR-related value may correspond to the actual OSNR.

In a preferred embodiment of the invention, the required OSNR value is determined from the difference between a maximal auxiliary noise power value still allowing error free transmission of the optical signal over the optical link under the predetermined relationship and the link-related equivalent noise power contribution. The condition that error free transmission be still allowed may be dictated by a predetermined preFEC BER threshold.

According to a preferred embodiment of the invention, the steps of the method are applied to one or more selected wavelengths or to one or more wavelength ranges. Such selected wavelengths or wavelength ranges may correspond to channels of the optical signal in a multichannel optical transmission network. Applying the method of the invention to said selected wavelengths or wavelength ranges may provide an increased reliability of the obtained estimation of the OSNR margin. For instance, the accuracy of some of the assumptions on which the method according to the invention is based may improve when applied to some of said selected wavelengths or wavelength ranges, which may be beneficially exploited for gaining information about other selected wavelengths or wavelengths ranges as will be shown below. Further, possible negative effects of inter-channel interference on the accuracy of the method can be advantageously avoided by conveniently choosing said some of the selected wavelengths or wavelengths to which the method of the invention is directly applied.

According to preferred embodiments of the invention, the method further comprises deriving one or more OSNR-related values, wherein each of the one or more OSNR-related values corresponds to or is at least indicative of the actual OSNR on the optical link for a respective given wavelength, and wherein each of the one or more OSNR-related values is based on at least two different performance values obtained for different operating conditions on the same optical link for the respective given wavelength; estimating a dependence of the OSNR-related values on a wavelength of the optical signal being transmitted on said optical link based on the one or more OSNR-related values; and using said estimated dependence for deriving one or more estimated OSNR-related values, wherein the one or more estimated OSNR-related values correspond to or are at least indicative of the actual OSNR on the optical link for a wavelength other than said given wavelengths.

Thus, an estimated dependence of the OSNR-related values on the wavelength of the signal transmission on the optical link may be obtained from said one or more OSNR-related values at respective wavelengths for different operating conditions, which allows, as elucidated above, obtaining a reliable estimate of the OSNR margin for a number of wavelengths or wavelength ranges without requiring direct measurement or estimation of absolute OSNR values at each of said wavelengths or wavelength ranges. This may be achieved for instance by interpolation, extrapolation, or any other suitable means. The estimated OSNR-related values may then be used to obtain estimates of the OSNR margin at the corresponding wavelengths as if they had been obtained by direct measurement. This way, estimate of the OSNR margin may be obtained for an entire wavelength range of the spectrum without having to rely on measurements covering said wavelength range. When applied to a multichannel optical transmission network, this may allow exploiting information about OSNR-related values of some selected channels to determine the OSNR margin at channels other than said selected channels. Further, this may in particular access regions of the spectrum at which OSNR measurements would otherwise be unfeasible, like for instance regions of the spectrum which are densely populated with channels, i.e. where there is a relatively small wavelength difference between different channels leading to a possible overlap of the signal power assigned to each of the channels that may be confused with optical noise. In case the wavelength difference between a considered channel and another channel for which the OSNR-related value has already been determined is small, the OSNR-related value for the latter channel can also be applied to the considered channel thanks to the smooth characteristics of ASE power versus wavelength. Thus, determining the OSNR-related value for a single channel may be sufficient.

A further aspect of the invention concerns an apparatus for determining contributions of different sources of signal degradation for optical signals transmitted over a given optical link in an optical transmission network, wherein the optical transmission network comprises a plurality of network elements and a plurality of optical links, wherein each optical link provides a connection between two network elements, wherein the apparatus comprises a processor configured for receiving data from one or more measuring devices, wherein each of the one or more measuring devices is connected to a given optical link of the optical transmission network, and wherein each measuring device is configured for measuring a performance value of a signal transmission on said given optical link of the optical transmission network; and wherein the processor is further configured for:

- deriving, from a performance value, an auxiliary noise power value based on a predetermined relationship between the performance value and the auxiliary noise power value, wherein the auxiliary noise power value comprises contributions of amplified spontaneous emission (ASE) power generated on said optical link and a link-related equivalent noise power contribution representing other sources of signal degradation upon transmission on said optical link,
- measuring or deriving an OSNR-related value for signal transmission on said optical link, wherein the OSNR-related value corresponds to or is at least indicative of the actual OSNR on said optical link, and
- determining, based on the auxiliary noise power value and on the OSNR-related value, a required OSNR value that defines a minimum OSNR that ensures successful data transmission on said optical link in view of said other sources of signal degradation represented by the link-related equivalent power contribution, and
- distinguishing, based on the auxiliary noise power value and on the OSNR-related value between noise power contributions of amplified spontaneous emission and link-related equivalent noise power contributions.

In a preferred embodiment of the invention, the processor is further configured for determining the link-related equivalent noise power contribution based on the auxiliary noise power value and on the OSNR-related value.

In a preferred embodiment of the invention, the processor is further configured for determining, based on the auxiliary noise power value and on the OSNR-related value, a required OSNR-related value that corresponds to or is at least indicative of a minimal OSNR that ensures successful data transmission on the optical link in view of said other sources of signal degradation represented by the link-related equivalent power contribution and determining the OSNR margin by subtracting the minimal OSNR from the actual OSNR indicated by the OSNR-related value (Q).

According to preferred embodiments of the invention, the apparatus further comprises one or more measuring devices, wherein each measuring device is connected to an optical link of the optical transmission network, and wherein each measuring device is configured for measuring a performance value of a signal transmission on said optical link of the optical transmission network, and wherein the one or more measuring devices are connected to the processor, and wherein the processor is configured for receiving data from the one or more measuring devices.

According to preferred embodiments of the invention, the apparatus further comprises a storage medium comprising said predetermined relationship between the performance value and the auxiliary noise power value, wherein the predetermined relationship is an equipment specific relationship obtainable or obtained during manufacture of optical devices of the optical transmission network.

In preferred embodiments of the invention, the processor is further configured for determining the OSNR-related value based on at least two different performance values measured for different operating conditions on the same optical link.

In a preferred embodiment of the invention, the apparatus further comprises a control unit connected to the optical transmission network and configured for controlling a power of signal transmission at each of the optical links. The control unit is hence suitable for providing different operating conditions on the optical links, which may be exploited for the purposes of determining OSNR margin based OSNR-related values for different operating conditions according to embodiments of the present invention.

In preferred embodiments of the invention, the control unit is further configured for decreasing the signal transmission power on a selected optical link if the OSNR margin estimated for said selected optical link is larger than a predefined margin value and/or for increasing the signal transmission power on said selected optical link if the OSNR margin is smaller than a predefined margin value.

In a preferred embodiment of the invention, the control unit is configured for decreasing and/or increasing said signal transmission power for one or more selected wavelengths or wavelength ranges.

According to a preferred embodiment of the invention, the processor is further configured for:

- deriving one or more OSNR-related values, wherein each of the one or more OSNR-related values corresponds to or is at least indicative of the actual OSNR on the optical link for a respective given wavelength, and wherein each of the one or more OSNR-related values is based on at least two different performance values obtained for different operating conditions on the same optical link for the respective given wavelength;
- estimating a dependence of the OSNR-related values on a wavelength of the signal transmission on said optical link based on the one or more OSNR-related values;
- using said estimated dependence for deriving one or more estimated OSNR-related values, wherein the one or more estimated OSNR-related values correspond to or are at least indicative of the actual OSNR on the optical link for a wavelength other than said given wavelengths.

According to preferred embodiments of the invention, the one or more measuring devices are further configured for measuring one or more of a BER, a power level, an OSNR, error-vector magnitude (EVM), span loss, amplifier gain, chromatic dispersion (CD), polarization mode dispersion (PMD), and polarization dependent loss (PDL) of the optical signal transmitted over the optical link.

In preferred embodiments of the invention, the apparatus further comprises at least an optical spectrum analyzer (OSA) connected to at least one optical link, wherein the optical spectrum analyzer is configured for measuring the OSNR-related value, in particular the OSNR itself, for signal transmission on said at least one optical link.

BRIEF DESCRIPTION OF THE FIGURES

Fig. 1    shows a schematic representation of an OSNR-related value taking into account contributions of different sources of signal degradation according to an embodiment of the invention and a schematic representation of the time progression of the OSNR-related value.

Fig. 2    shows a schematic representation of the time progression of an OSNR-related value according to an embodiment of the invention.

Fig. 3    shows a flow diagram illustrating different steps of a method according to an embodiment of the invention.

Fig. 4    shows a flow diagram illustrating different steps of a method according to another embodiment of the invention.

Fig. 5    shows a schematic representation of the signal power adjustment in an optical link for deriving two or more OSNR-related values.

Fig. 6    illustrates a method according to an embodiment of the invention for combining the method of Fig. 3 and the method of Fig. 4 by means of interpolation.

Fig. 7    shows a schematic representation of an apparatus according to an embodiment of the invention.

DESCRIPTION OF THE PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

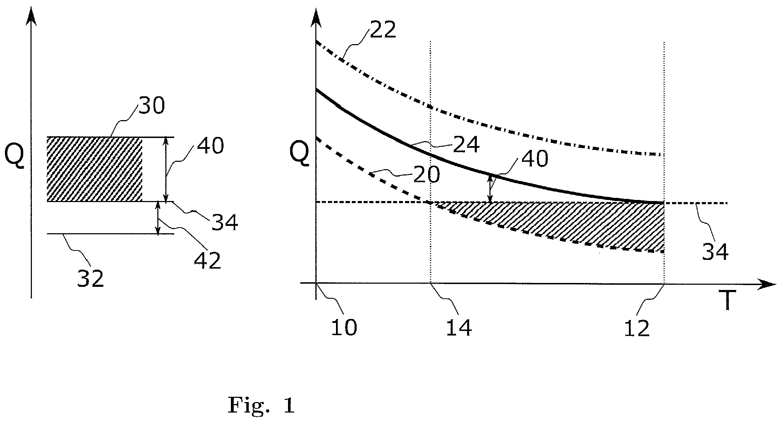

Fig. 1 shows on the left-hand side a schematic representation of different values of a OSNR-related value Q as used in the present invention, which corresponds to or is at least indicative of an actual OSNR at the end of an optical link of an optical transmission network on which an optical signal is transmitted. As shown in the figure, there is a required OSNR-related value 32 that would be necessary for error free transmission if performance is solely impacted by noise power due to ASE, i.e. if no signal distortions are induced between transmitter and receiver. The required OSNR-related value 32 hence corresponds to the minimum OSNR ensuring error free signal transmission (i.e. the required OSNR) and that would be measured in a back-to-back configuration under simulated noise conditions, in which no link-related sources of signal degradation are present.

When sources of signal degradation other than ASE, like for example nonlinearities arising in the optical link, are taken into account, the minimal OSNR necessary for error free transmission increases due to the additional signal distortions caused by said other sources of signal degradation, and hence the required OSNR-related value increases to a value 34 corresponding to the minimum OSNR needed for error free transmission when both noise power contribution due to ASE and equivalent noise power contributions due to sources of signal degradation other than ASE are taken into account. In this case, the required value of Q increases by an amount 42 given by the additional effect of said sources of signal degradation other than ASE. Note that the OSNR-related value is indicated in logarithmic units in the figure.

Thus, the required OSNR-related value 32 corresponds to the OSNR-related value that would be necessary for error free signal transmission if real optical noise due to ASE were the only source of performance degradation present in the optical link, while the required OSNR-related value 34 corresponds to an equivalent OSNR-related value that is necessary for error free signal transmission when the link-related sources of signal degradation other than ASE are accounted for in the form of equivalent noise power as explained above. The difference between the actual OSNR-related value 30 and the required OSNR-related value 34 is indicative of the OSNR margin for the optical link that guarantees error free signal transmission on the optical link in the presence of said link-related sources of signal distortion.

The right-hand side of Fig. 1 shows a schematic representation of the time evolution of the actual OSNR as given by a OSNR-related value Q according to an embodiment of the invention for an optical link between begin of life 10 and end of life 12 of an optical transmission network. Therein, three situations are compared. Curve 22 represents a situation in which the OSNR margin at end of life 12 exceeds the minimum OSNR for error free signal transmission indicated by the required OSNR-related value 34. Thus, this situation corresponds to an excessive OSNR margin and hence to a waste of network resources to be avoided. Curve 20 represents a situation in which the OSNR margin drops at a point in time 14 below the minimum OSNR for error free signal transmission indicated by the required OSNR-related value 34, thereby possibly causing a traffic interruption or at least a significant signal distortion. Thus, the situation corresponds to a OSNR margin that is too small to guarantee error free transmission of optical data between begin of life 10 and end of life 12. Curve 24 represents a desired situation in which the OSNR margin at end of life 12 is just enough to still guarantee error free signal transmission, such that network resources are optimally employed in this case. The OSNR margin 40 is given at any instant of time by a distance between the corresponding curve indicating the OSNR-related value Q and the dashed line signalling the required OSNR-related value 34.

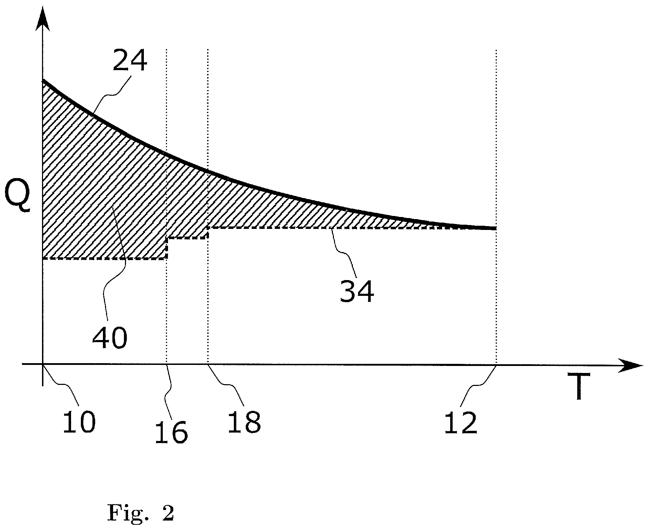

Fig. 2 shows a schematic representation of the time evolution of the actual OSNR as given by a OSNR-related value Q according to an embodiment of the invention for an optical link between begin of life 10 and end of life 12 of an optical transmission network. The OSNR margin 40 experiences changes at points in time 16 and 18, which may result from changes in the network configuration of the optical transmission network affecting the degree to which noise may influence signal transmission, like, for example, changes or replacement of optical equipment including optical fiber, or changes in the number of channels. For example, changes in the number of channels at points in time 16 and 18 might lead to an increased impact of nonlinear fiber effects and therefore a larger equivalent nonlinear noise power. As a consequence, the minimum OSNR required for error free signal transmission increases due to increased inter-channel interferences.

The method for determining an OSNR margin according to embodiments of the present invention allows taking into account the minimum OSNR that ensures successful data transmission on the optical link in view of actual noise power contributions due to ASE and equivalent noise power contribution due to link-related sources of signal degradation like nonlinearities. In the exemplary case shown in Fig. 2, the minimum OSNR, and hence the required OSNR-related value increase in time. This means that the OSNR margin decreases in time. However, since the shown example corresponds to a situation in which the OSNR margin at end of life vanishes, the time evolution of the OSNR-related value 24 can be considered to be acceptable. If the increases in the minimum OSNR registered at the point in time 16 and 18 were not present, the OSNR margin at end of life would not vanish, which corresponds to a situation in which network resources are being wasted by virtue of a too high OSNR margin. If this were the case, corrective measures could be initiated so as to adapt the OSNR margin to the actual requirements of the optical link, like for example, a reduction of the signal power on the optical link.

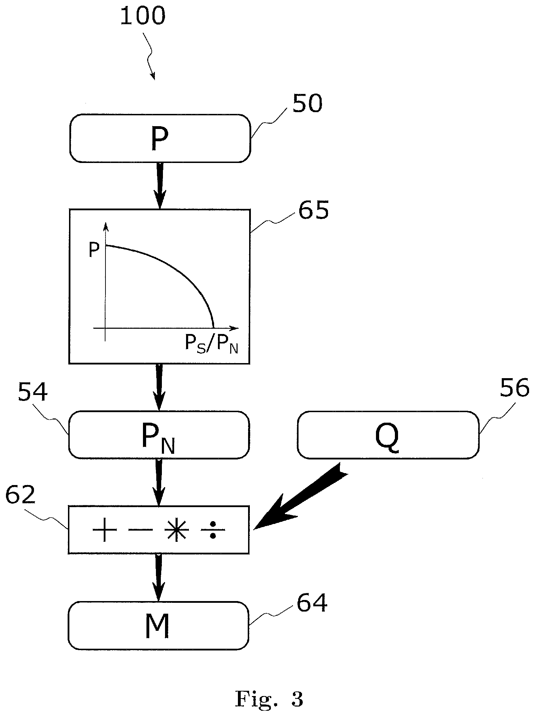

Fig. 3 shows a schematic flow diagram of a method 100 for determining an OSNR margin according to an embodiment of the invention. The method comprises a step 50 of measuring a performance value P of signal transmission on an optical link of an optical transmission network. The method further comprises a step 54 of deriving an auxiliary noise power value $P_N$ from the performance value P and the measured signal power $P_S$ based on a predetermined relationship 65 between the performance value P and the ratio of the signal power $P_S$ and the auxiliary noise power value $P_N$, which may have been obtained during manufacture of the corresponding transmitter and/or receiver used in the optical link at hand, for example in a back-to-back configuration and controlled simulated noise conditions.

The method further comprises a step 56 of measuring or deriving an OSNR-related value Q for the signal transmission on the optical link. The OSNR-related value Q corresponds in the example of Fig. 3 to the actual OSNR on the optical link due to ASE, which may be directly measured by means of an OSA connected to the optical link. Alternatively, the OSNR-related value Q might also be provided by an entity calculating network parameters based on topological data.

The method further comprises a step 62 of determining, based on the auxiliary noise power value $P_N$ and on the OSNR-related value Q, a required OSNR-related value corresponding to a minimum OSNR that ensures successful data transmission on the optical link accounting both for a contribution to the auxiliary noise power value of ASE and a contribution of other link-related noise sources.

Finally, the method comprises a step 64 of determining the OSNR margin M by subtracting the minimum OSNR indicated by the required OSNR-related value from the actual OSNR indicated by the OSNR-related value Q.

Example 1

According to a first example, the performance value P may correspond to a preFEC BER related to total noise power on the optical link for the channel under consideration, i.e. to the auxiliary noise power value $P_N$ by the predetermined relationship F, mapping values of the auxiliary noise power value $P_N$ to values of the performance parameter P:

$$P = F\left(\frac{P_S}{P_N}\right); \quad F: 1/N \rightarrow P, \text{ with } 1/N = \frac{P_N}{P_S}$$

where $P_S$ stands for the signal power at the receiver for the channel under consideration. The predetermined relationship may then be inverted to map any preFEC BER measurement, i.e. any performance value, to the corresponding auxiliary noise power value $P_N$:

$$F^{-1}: P \rightarrow 1/N$$

The OSNR-related value, Q, may be measured by an OSA. Then, the corresponding contribution to the auxiliary noise power value $P_N$ due to ASE - which is the only contribution detectable by the OSA - may be obtained from

$$P_A = P_S \cdot 10^{-\frac{Q}{10}} = P_S \cdot 10^{-\frac{OSNR}{10}}$$

since the OSNR-related value corresponds in this case to the actual OSNR expressed in logarithmic units. The difference between the auxiliary noise power value $P_N$ and the contribution thereto due to ASE, $P_A$, corresponds to link-related equivalent noise power contribution $P_L$ due to all sources of signal distortion other than ASE, which are not measured by the OSA:

$$P_L = P_N - P_A$$

The required OSNR-related value $Q_{req}$ may then be obtained from

$$Q_{req} = 10 \log_{10}\left(\frac{P_S}{P_{Amax}}\right) = OSNR_{min}$$

where $P_{Amax}$ stands for a maximal contribution of ASE to the auxiliary noise power value $P_N$, which maximal contribution is given by the difference between the maximal auxiliary noise power value $P_{Nmax}$ and the link-related equivalent power contribution $P_L$:

$$P_{Amax} = P_{Nmax} - P_L$$

where $P_{Nmax}$ corresponds to the maximal auxiliary noise power value compatible with a predetermined preFEC BER threshold $P_0$, which may be measured e.g. in a back-to-back configuration in a manufacturing stage:

$$F^{-1}: P_0 \rightarrow P_{Nmax}$$

The OSNR margin M may then be obtained by subtracting the minimum OSNR indicated by the required OSNR-related value $Q_{req}$ from the actual OSNR indicated by the OSNR-related value Q:

$$M = Q - Q_{req} = OSNR - OSNR_{min}$$

While Example 1 shows a possible implementation of the embodiment of the invention illustrated in Fig. 3, it is worth pointing out that this exemplary implementation is only one possibility, and that the performance value, the OSNR-related values and all other values involved may correspond to parameters or quantities different to those considered in the example.

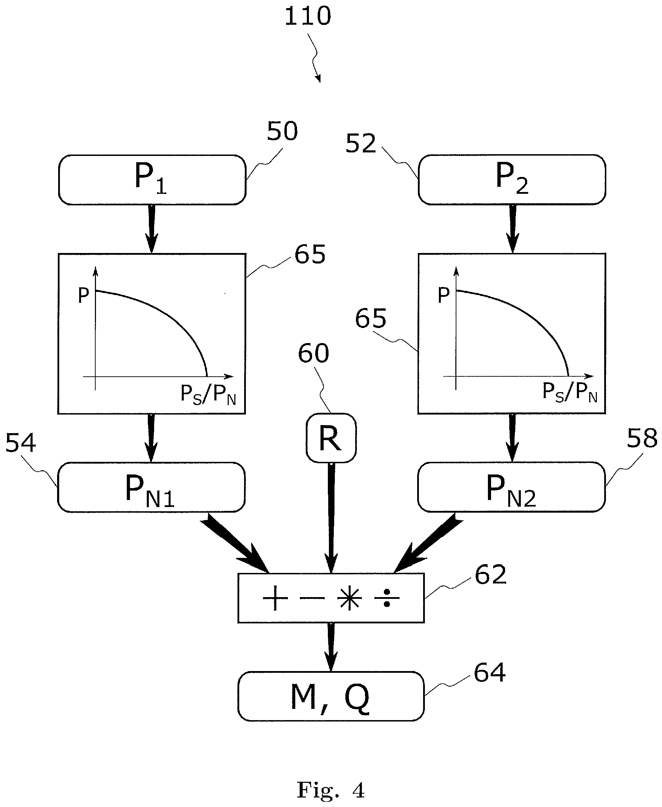

Fig. 4 shows a schematic flow diagram of a method 110 for determining an OSNR margin according to another embodiment of the invention. The method comprises a step 50 of measuring a first performance value $P_1$ and a step 52 of measuring a second performance value $P_2$, wherein the performance values $P_1$ and $P_2$ are measured at different operating conditions of the optical transmission network, like for example at different signal transmission powers. The method further comprises a step 54 of deriving a first auxiliary noise power value $P_{N1}$ from the performance value $P_1$ based on a predetermined relationship 65 between the performance value $P_1$ and the signal power $P_{S1}$, and a step 58 of deriving a second auxiliary noise power value $P_{N2}$ from the performance value $P_2$ and signal power $P_{S2}$ based on the predetermined relationship 65. The predetermined relationship 65 may have been obtained during manufacture of the corresponding transmitter and/or receiver used in the optical link at hand, for example in a back-to-back configuration and controlled simulated noise conditions.

The method further comprises a step 60 of deriving an OSNR-related values R relating the OSNR-related values determined for said two operating conditions that again have been derived from the first performance value $P_1$ and second performance value $P_2$. The OSNR-related value R is hence determined based on the first performance value $P_1$ and second performance value $P_2$ and characterizes the relative impact of ASE on the two performance values $P_1$ and $P_2$. The first performance value $P_1$ and the second performance value $P_2$ are measured at different operating conditions, corresponding for example to different signal transmission powers on the optical link. The OSNR-related value R may in particular correspond to or be indicative of the ratio of the noise power contributions due to ASE corresponding to the two different operating conditions, which is related to the difference in OSNR between said two operating conditions.

The method further comprises a step 62 of determining based on the first auxiliary noise power value $P_{N1}$, on the second auxiliary noise power value $P_{N2}$ and on the OSNR-related value R, a required OSNR-related value that is indicative of a minimum OSNR that ensures successful data transmission on the optical link in view of all possible sources of signal degradation. Finally, the method comprises a final step 64 of determining a OSNR-related value Q corresponding to the operating conditions at which the first performance value is measured or to the operating conditions at which the second performance value is measured, and the OSNR margin M by subtracting the OSNR indicated by the required OSNR-related value from the actual OSNR indicated by the determined OSNR-related value Q.

Example 2

According to a second example, two performance values ($P_1$, $P_2$) are obtained corresponding to different operating conditions.

The first performance value $P_1$ is obtained at first operating conditions, e.g. for a first value of the signal power, and corresponds to a preFEC BER related to the auxiliary total noise power on the optical link for the channel under consideration, i.e. to a first auxiliary noise power value $P_{N1}$ by the predetermined relationship F, mapping values of the first auxiliary noise power value $P_{N1}$ to values of the first performance parameter $P_1$:

$$P_1 = F\left(\frac{P_{N1}}{P_{S1}}\right); \quad F: N_1 \to P_1, \text{ with } N_1 = \frac{P_{N1}}{P_{S1}}$$

The second performance value $P_2$ is obtained at second operating conditions, e.g. for a second value of the signal power, and corresponds to a preFEC BER related to the auxiliary total noise power on the optical link for the channel under consideration, i.e. to a second auxiliary noise power value $P_{N2}$ by the predetermined relationship F.

$$P_2 = F\left(\frac{P_{N2}}{P_{S2}}\right); \quad F: P_{N2} \to P_2 \text{ with } N_2 = \frac{P_{N2}}{P_{S2}}$$

The predetermined relationship may then be inverted in each case to map the preFEC BER measurements corresponding to the first and second operating conditions to the corresponding normalized auxiliary noise power values $N_1$ and $N_2$:

$$F^{-1}: P_1 \to N_1 \quad \text{and} \quad F^{-1}: P_2 \to N_2$$

where the noise powers have been normalized to (or divided by) the respective signal powers.

In each case, the auxiliary noise power value results from the sum of all possible sources of signal degradation, that is, of the noise power contribution due to ASE $P_{A1}$, $P_{A2}$ and an equivalent noise power contribution due to all other link-related sources of signal degradation $P_{L1}$, $P_{L2}$:

$$N_1 = A_1 + L_1 \quad \text{and} \quad N_2 = A_2 + L_2,$$

where A and L stand for the respective relative or normalized power contributions

$$A_1 = \frac{P_{A1}}{P_{S1}}, \quad L_1 = \frac{P_{L1}}{P_{S1}}, A_2 = \frac{P_{A2}}{P_{S2}}, \quad L_2 = \frac{P_{L2}}{P_{S2}}$$

Thus, assuming that the link-related sources of signal degradation other than ASE are at least approximately the same for both, the first and second operating conditions, i.e.

$$L_1 = L_2 = L,$$

it follows

$$N_2 - N_1 = A_2 - A_1$$

Thus, if an OSNR-related value R is obtained that corresponds to a difference between the OSNR on the optical link for the operating conditions at which the first performance value $P_1$ is measured and the OSNR on the optical link for the operating conditions at which the second performance value $P_2$ is measured,

$$R = ONSR_1 - OSNR_2$$

the ONSR-related value may be related to the ratio of the noise power contribution due to ASE at first and second operating conditions:

$$\frac{A_2}{A_1} = \frac{10^{\frac{OSNR_1}{10}}}{10^{\frac{OSNR_2}{10}}} = 10^{R/10}$$

from which it follows that

$$A_1 = \frac{N_1 - N_2}{1 - 10^{R/10}}$$

and from which the value of L may be obtained, and hence the OSNR margin for any of the operating conditions considered can be calculated for a given preFEC BER threshold as shown in Example 3.

Further, a measure of the OSNR for the first operating condition can be obtained via

$$OSNR_1 = -10 \log_{10}\left(\frac{N_1 - N_2}{1 - 10^{R/10}}\right).$$

Note that corresponding equations for $A_2$ and $OSNR_2$ can be derived in an analogous way.

The two presented examples reveal another important aspect for applying the presented method. Although the method is based on the predetermined relationship 65 that links the performance parameter P to a relative quantity, namely the ratio of the signal power $P_S$ and the auxiliary noise power $P_N$, absolute or relative figures can be used for the calculations. In the first example, absolute power levels such as the auxiliary noise power $P_N$, the noise power due to ASE $P_A$ and the link-related equivalent noise power $P_L$ have been used. In order to derive the auxiliary noise power $P_N$ from the relationship 65, the signal power $P_S$ at the receiver needs to be known. Since most receivers measure the power of the incoming signal anyway, this is not a real limitation. However, the second example shows that relative quantities are sufficient for the calculations.

In detail, the absolute power levels listed with respect to Example 1 are replaced by corresponding normalized quantities N, A and L that are normalized to the signal power $P_S$ without any need to know the actual absolute value of this quantity. Thus, unless the contrary is explicitly indicated, this disclosure should be understood as referring to noise power level referring to the absolute power level or to the corresponding relative or normalized value, since both values can be used equally.

In the following, this is demonstrated for the first example. Making use of the function F, the normalized auxiliary noise power N is obtained from the performance value P. Furthermore, the readings from an OSA indicating the OSNR-related value Q provide directly the normalized power of the optical noise and using the relation L = N - A directly gives the normalized equivalent noise power contribution L arising from link-related sources of signal degradation other than ASE. The required OSNR-related value $Q_{req}$ may then be obtained from

$$Q_{req} = 10 \log_{10}\left(\frac{1}{A_{max}}\right) = \text{OSNR}_{min}$$

where $A_{max}$ stands for a maximal contribution of ASE to the normalized auxiliary noise power value N, which is given by the difference between the maximal normalized auxiliary noise power value $N_{max}$ and the link-related normalized equivalent power contribution L:

$$A_{max} = N_{max} - L$$

where $N_{max}$ corresponds to the maximal normalized auxiliary noise power value compatible with a predetermined preFEC BER threshold $P_0$. The OSNR margin M may then be obtained by subtracting the minimum OSNR indicated by the required OSNR-related value $Q_{req}$ from the actual OSNR indicated by the OSNR-related value Q:

$$M = Q - Q_{req} = \text{OSNR} - \text{OSNR}_{min}$$

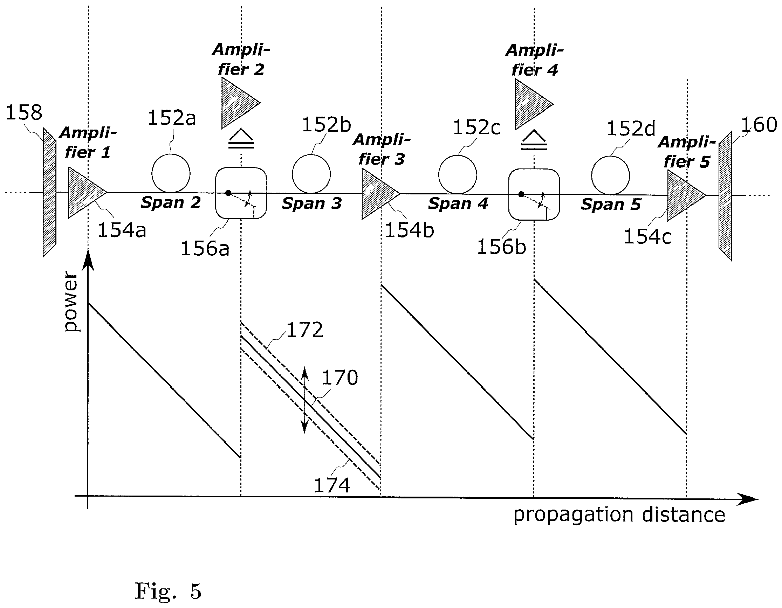

Fig. 5 shows a representative technique for determining the OSNR-related value R that describes the relation of the OSNR values on the optical link for first and second operating conditions at which first and second performance values such as $P_1$, $P_2$ are respectively measured.

The upper part of Fig. 5 shows an optical path in an optical transmission network having a multiplexer 158 and a demultiplexer 160, and comprising four optical links 152a-152d, optical amplifiers 154a-154c, and photonic cross connects 156a, 156b in between. The photonic cross connects 156a, 156b can correspond to multi-degree structures or to simple optical add-drop multiplexers. Such photonic cross connects typically comprise optical amplifiers at their inputs and outputs, such that they provide some additional ASE. Therefore, for the purpose of noise considerations, the photonic cross connects 156a, 156b can be regarded as optical amplifiers as well. This may be done by accounting for a photonic cross connect 156a or 156b by means of a noise factor corresponding to the noise figure of the complete photonic cross connector 156a or 156b.

There are several options for varying the power of a channel under consideration of the optical signal. For example, the launch power of the channel under consideration may be reduced at the input end of the optical path (i.e. before the optical signal coming from multiplexer 158 enters the optical link 152a), whereas the power of the other channels remains unchanged. Thus, the power level of the channel under consideration is lowered by the same factor across the whole optical path, which in fig. 5 comprises the four optical links 152a to 152d. Restricting the signal power change to one channel allows assuming that the overall input powers received by the amplifiers 154a-154c and 156a-156bdo not change and hence that the ASE generated by these amplifiers does not vary. Therefore, the noise figure of the amplifiers can be assumed to be constant. Thus, the OSNR change at the end of the optical path comprising the four optical links 152a to 152d is a linear function of the signal power at the beginning of the link 152a. In other words, lowering the launch power of the channel by 1dB before optical link 152a leads to a reduction of the OSNR at a receiver located downstream with respect to the propagation direction of the optical signal (which in the figure is supposed to be from left to right) after the optical link 152dby 1dB as well.

As an alternative, it is also possible to vary the power of all channels at the input end of the path. In this case, the input power of each of the amplifiers 154a-154c and 156a-156b undergoes larger variations as compared to the previous scenario and the noise figure of the amplifiers 154a-154c and 156a-156b might undergo some changes that can no longer be neglected. However, typical amplifiers are configured for determining the optical power at their inputs and the variation of the noise figure with the input power is known for the with sufficient accuracy. Thus, the relative change of the generated ASE can be calculated from the detected input power changes. Again, the relative change of the OSNR induced by channel power variation can be calculated and can be used for the presented technique.

Furthermore, the contribution of the link to the equivalent noise power, i.e. the link-related equivalent noise power contribution $P_L$, may also change. This can be taken into account in the calculations by determining the relative change of the impact of nonlinear effects using appropriate models.

Instead of varying the signal power along the complete optical path, it is also an option to vary the signal power within some of the optical links 152a to 152d only. The lower part of Fig. 5 illustrates an example of how the gain of the amplifiers 154 and the photonic cross connects 156 can be adjusted such that the gain changes mutually compensate in order that the signal transmission power changes only in one of the optical links 152a to 152d. For the purpose of noise calculation, the noise power corresponding to ASE generated by an optical amplifier must be determined for each amplifier, which is given by

$$P_A = h \cdot v \cdot \Delta v \cdot (1 + F \cdot G) \approx h \cdot v \cdot \Delta v \cdot F \cdot G$$

where h is the Planck constant, v is the frequency of the channel under consideration, $\Delta v$ is the measurement bandwidth, which corresponds to 0.1 nm for OSNR measurements, G is the gain of the amplifier, and F is the noise factor of the amplifier. Note that F and G are wavelength dependent, although not explicitly shown.

Thus, the total noise power corresponding to ASE generated over the optical path of Fig. 5 can be expressed as

$$P_A^{path} = \left( \sum_{i=1}^{N} F_i * G_i * \prod_{j=i+1}^{N} G_j * a_j \right) * h * v * \Delta v$$

where the index i runs from 1 to 5 and is indicative of the respective amplifiers and $a_j$ stands for the loss of each of the spans, wherein the spans are numbered from 2 to 5. In this equation, all figures are indicated in linear units.

The signal power in the second optical link 152b may be increased for the channels by increasing the gain $G_2$ of the second "amplifier" 156a (i.e. of the photonic cross-connect 156a) for said channel for example by a factor $\alpha$. In this case, the first and second operating conditions correspond to different signal powers in the second optical link 152b caused by the change in the gain of the second amplifier 156a, wherein the first operating condition is given before said change and the second operating condition is given after said change.

Further, in order to keep the signal power in the remaining optical links 152 constant, the gain $G_3$ of the third amplifier 154b is decreased by applying a factor $1/\alpha$. Consequently, only one summand in the above expression for the total noise power corresponding to ASE generated over the optical path is changed, leading to a ratio of the noise power contribution due to ASE at first and second operating conditions

$$\frac{A_1}{A_2} = \frac{F_3 G_3 \prod_{j=4}^{5} G_j a_j + \sum_{i=1}^{5, i \neq 3} F_i G_i \prod_{j=i+1}^{5} G_j a_j}{\frac{1}{\alpha} F_3 G_3 \prod_{j=4}^{5} G_j a_j + \sum_{i=1}^{5, i \neq 3} F_i G_i \prod_{j=i+1}^{5} G_j a_j} = 10^{-R/10}$$

From this equation the corresponding OSNR-related value R as employed in the method described with respect to Fig. 4 (cf. e.g. Example 2) can be obtained. According to this equation, the ASE at the end of the optical path, i.e. after the optical signal crosses the optical link 152d, is a linear function of the gain $G_3$ of the third amplifier 154b, which is placed behind the optical link 152a in which the signal power has been changed.

The solid lines in the lower part of Fig. 5 represent the signal power distribution over the optical links 152a to 152d. The signal power in the second optical link 152b can be changed according to the presented exemplary technique such that it changes from solid line 170 to dashed line 172, if signal power in the second optical link 152b is increased, or to dashed line 174 if signal power in the second optical link 152b is decreased.

Note that it would also be possible to modify the signal power of a single channel only, for example within a part of the optical path embedded between two photonic cross connects. This becomes possible since photonic cross connects allow introducing channel selective attenuation and thus the power of one channel can be adjusted separately from the power of the other channels of an optical signal. In this case, variation of the noise figure becomes negligible unless the number of channels of the optical signal is very small.

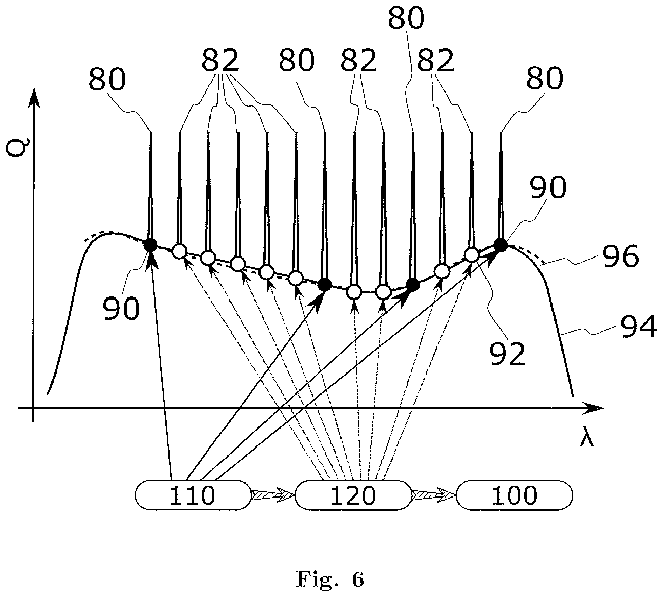

Fig. 6 shows a schematic representation of a method according to an embodiment of the invention combining the method of determining an OSNR margin from a direct OSNR measurement illustrated in Fig. 3 and the method of determining an OSNR margin from a relative OSNR-related value corresponding to two different operating conditions illustrated in Fig. 4, wherein the methods are respectively applied to individual channels 80, 82 transmitted over the optical link, i.e. to a selected wavelength or wavelength range.

The method comprises a first stage 110 at which the method illustrated in Fig. 4 and described with respect thereto is used to determine OSNR-related values 90, which are represented in the figure by black dots, and corresponding OSNR margins for some of the channels 80. Each of the OSNR-related values 90 is based on at least two different performance values obtained for different operating conditions on the optical link for the wavelength corresponding to the respective one of the channels 80 and each of the OSNR-related is indicative of the OSNR at the operating conditions at which one of said at least two different performance values is obtained. This means that if each of the OSNR-related values 90 is obtained based for example on a first performance value obtained for a first signal transmission power and on a second performance value obtained for a second signal transmission power different to the first signal transmission power, all OSNR-related values 90 are for instance obtained for the first signal transmission power. In the example

16

shown, four OSNR-related values 90 and four OSNR margins are obtained during stage 110 for four corresponding channels 80. Note however that the number of channels at which stage 110 is applied is not limited thereto. As an alternative to the method 110, the OSNR values used for interpolation or similar processing might also stem from direct measurements.

Note that the OSNR-related values shown in Fig. 5 are directly related to the noise power contribution due to ASE at the respective wavelength. The difference of the interpolation function 96 has been exaggerated with respect to the true dependence function 94 on illustrative purposes.

The OSNR-related values 90 are used to estimate a dependence of the OSNR-related values on the wavelength of the signal transmission on the optical link, for instance by means of interpolation or by any other suitable means including extrapolation. In the example shown, an interpolation function 96 is obtained at a stage 120 that allows assigning an OSNR-related value 92 (represented by white dots) to each of the channels 82 for which the OSNR margin has not been obtained during stage 110 by applying during stage 100 the method for determining an OSNR margin from a direct OSNR measurement illustrated in Fig. 3 and described above with respect thereto. Thus, the estimated dependence of the OSNR-related values on wavelength given by the interpolation function 96 is used for deriving the OSNR-related values 92 corresponding to channels 82, which are indicative of the actual OSNR on the optical link at the wavelengths corresponding to each of the channels 82.

Thus, according to this embodiment, the OSNR margin may be obtained for each one of the channels 80, 82 on the optical link based on a few relative OSNR measurements for a reduced number of channels 82 without requiring any direct absolute OSNR measurement.

Furthermore, in some scenarios it might be sufficient to determine the OSNR-related value of one channel only according to method 110 and to use the determined OSNR-related value as an approximation of the actual OSNR-related value for calculating the margin of neighboring channels according to method 100.

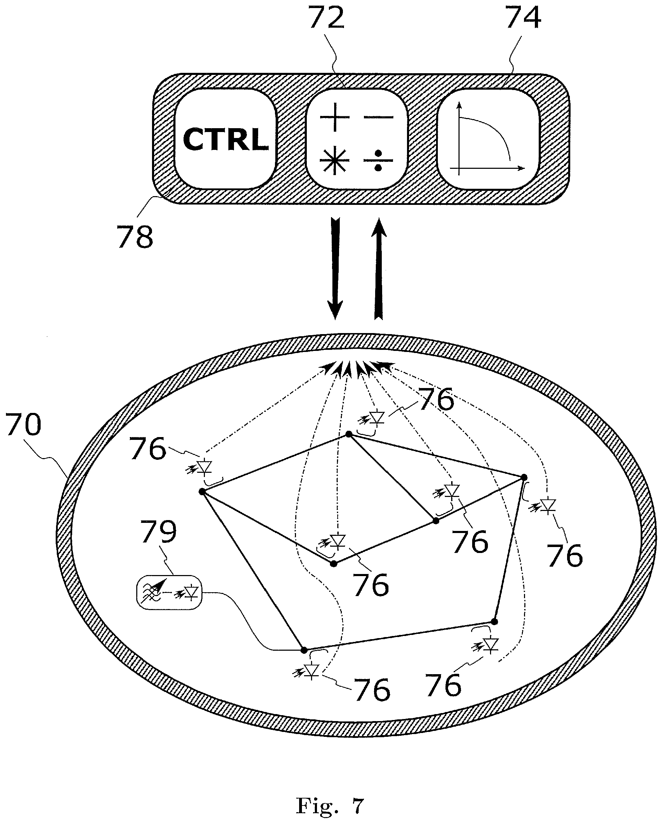

The term interpolation is used in a broad sense and is not limited to direct interpolation of the OSNR-related values. For example, good results can also be achieved by interpolating optical noise power values thanks to the smooth wavelength dependent characteristics of this parameter. In particular, the optical noise power for the channels 80 can be directly determined from the available OSNR-related values and the signal powers. With these data, the ASE is determined for the channels 82 for which no OSNR-related value is available. Making use of corresponding detected signal powers, the OSNR value required for method 100 is calculated for these channels. Fig. 7 shows a schematic representation of an apparatus for determining contributions of different sources of signal degradation for optical signals transmitted over a given optical link in an optical transmission network 70 that comprises a plurality of network elements connected by a plurality of optical links. The network elements are represented by black dots and the optical links joining them by straight lines. The apparatus comprises a plurality of measuring devices 76, which in the embodiment shown correspond to optical receivers configured for determining the preFEC BER and the signal power on the corresponding optical link. Each optical receiver 76 is connected to an optical link of the optical transmission network 70. The estimation apparatus further comprises a processor 72 which is configured for receiving data from one or more optical receivers 76 and for carrying out the method for determining an OSNR margin of any of the embodiments of the invention disclosed herein. In particular, the processor 72 is configured for:

- deriving, from a preFEC BER measurement by an optical receiver 76, an auxiliary noise power value $P_N$ based on a predetermined relationship between preFEC BER and the auxiliary noise power value $P_N$, wherein the auxiliary noise power value $P_N$ comprises contributions $P_A$ of amplified spontaneous emission (ASE) power generated on said optical link and a link-related equivalent noise power contribution $P_L$ representing other sources of signal degradation upon transmission on said optical link,
- measuring or deriving an OSNR-related value Q for signal transmission on said optical link, wherein the OSNR-related value Q corresponds to or is at least indicative of the actual OSNR on said optical link,

  - distinguishing, based on the auxiliary noise power value ($P_N$) and on the OSNR-related value (Q) between noise power contributions of amplified spontaneous emission and link-related equivalent noise power contributions,
  - determining the link-related equivalent noise power contribution ($P_L$) based on the auxiliary noise power value ($P_N$) and on the OSNR-related value (Q),

- determining, based on the auxiliary noise power value $P_N$ and on the OSNR-related value Q, a required OSNR value that defines a minimum OSNR that ensures successful data transmission on said optical link in view of said other sources of signal degradation represented by the link-related equivalent power contribution $P_L$, and
- determining the OSNR margin for said optical link by subtracting the required OSNR from the actual OSNR.

The apparatus further comprises a storage medium 74, a control unit 78, and an optional optical spectrum analyser (OSA) 79. The storage medium 74 comprises the predetermined relationship between the performance value and the auxiliary noise power value. The control unit 78 is connected to the optical transmission network 70 and configured for controlling a power of signal transmission at each of the optical links. The control unit 78 is suitable for providing different operating conditions on the optical links, which may be exploited for the purposes of determining the OSNR margin based OSNR-related values for different operating conditions according to embodiments of the present invention. The control unit 78 is further configured for decreasing the signal transmission power on a selected optical link of the optical transmission network 70 if the OSNR margin estimated for said selected optical link is larger than a predefined margin value and/or for increasing the signal transmission power on said selected optical link if the OSNR margin is smaller than a predefined margin value. Further, control unit 78 is configured for decreasing and/or increasing said signal transmission power for one or more selected wavelengths or wavelength ranges. The OSA 79 is connected to one or more of the optical links of the optical transmission network 70 and configured for obtaining an OSNR-related value corresponding to a direct measurement of an absolute OSNR value.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

REFERENCE SIGN LIST

| | |
|---|---|
| 10 | Begin of life (BOL) |
| 12 | End of life (EOL) |
| 14 | Time at which traffic interruption occurs |
| 16, 18 | Time at which the channel count changes |
| 20 | Curve illustrating evaluation of Q and leading to traffic interruption |
| 22 | Curve illustrating evaluation of Q with too large margin |
| 24 | Target curve illustrating evaluation of Q |
| 30 | Actual value of Q |
| 32 | Required value of Q for back-to-back |
| 34 | Required value of Q for real transmission of network |
| 40 | Margin |
| 42 | Penalties and additional margins such as safety margin |
| 50, 52 | Measurements of performance |
| 54, 58 | Determination of equivalent noise power |
| 56 | Providing value of Q |
| 60 | Providing ratio of values of Q |
| 62 | Processing providing data (calculations) |
| 64 | Determining margin and/or Q value |
| 65 | Deriving value of Q from measured performance using characteristic curve |
| 70 | Optical network |
| 72 | Processor |
| 74 | Storage medium |
| 76 | Measuring device |
| 78 | Control unit |
| 79 | Optical spectrum analyzer |
| 80 | Channels for which Q value is determined using algorithm 110 |
| 82 | Channels for which Q value is determined by means of interpolation |
| 90 | Q value for channels 80 |
| 92 | Q value for channels 82 |
| 94 | Curve representing distribution of Q values |
| 96 | Curve representing distribution of Q values obtained by interpolation |
| 100 | Algorithm for known value of Q |
| 110 | Algorithm for known ratio of values of Q |
| 120 | Interpolation |
| 152a-152d | Optical fibers |
| 154a | Optical amplifier |
| 154b | Optical amplifier |

| 154c | Optical amplifier |
| 156a | Photonic cross connect |
| 156b | Photonic cross connect |
| 158 | Multiplexer |
| 160 | Demultiplexer |
| 170 | Power distribution after installation |
| 172 | Power distribution with power increased in second span |
| 174 | Power distribution with power reduces in second span |
| M | margin |
| Q | OSNR-related parameter |
| P | performance value (BER) |
| R | Ratio or two values of the performance related parameter |
| T | time |

**Claims**

1. A method of determining contributions of different sources of signal degradation for optical signals transmitted over an optical link in an optical transmission network, comprising the following steps:

measuring a performance value (P) of a signal transmission on said optical link, deriving, from the performance value, an auxiliary noise power value ($P_N$) based on a predetermined relationship between the performance value (P) and the auxiliary noise power value ($P_N$), wherein the auxiliary noise power value ($P_N$) comprises contributions of amplified spontaneous emission power ($P_A$) generated on the optical link and a link-related equivalent noise power contributions ($P_L$) representing other sources of signal degradation upon transmission on the optical link,

measuring or deriving an OSNR-related value (Q) for the signal transmission on the optical link, wherein the OSNR-related value (Q) corresponds to or is at least indicative of an actual OSNR on the optical link, and

distinguishing, based on the auxiliary noise power value ($P_N$) and on the OSNR-related value (Q), between noise power contributions of amplified spontaneous emission and link-related equivalent noise power contributions.

2. The method of claim 1, wherein the step of distinguishing between noise power contributions of amplified spontaneous emission and link-related equivalent noise power contributions is or comprises a step of, based on the auxiliary noise power value ($P_N$) and on the OSNR-related value (Q), determining the link-related equivalent noise power contribution ($P_L$) or one or more parameters directly reflecting said link-related equivalent noise power contribution ($P_L$).

3. The method of claim 1 or 2, further comprising the steps of:

determining, based on the auxiliary noise power value ($P_N$) and on the OSNR-related value (Q), a required OSNR-related value that corresponds to or is at least indicative of a minimal OSNR that still ensures successful data transmission on the optical link in view of said other sources of signal degradation represented by the link-related equivalent noise power contribution ($P_L$), and

determining the OSNR margin by subtracting the required OSNR from the actual OSNR indicated by the OSNR-related value (Q).

4. The method of any of the preceding claims, wherein the predetermined relationship is obtainable or obtained from a back-to-back (B2B) measurement; and/or

wherein said predetermined relationship between the performance value and the auxiliary noise power value is an equipment specific relationship that is obtainable or obtained before operating a transmitter and/or a receiver in said optical link.

5. The method of any of the preceding claims, wherein the OSNR-related value is determined based on at least two different performance values measured for different operating conditions on the same optical link;

wherein the method preferably further comprises determining from the OSNR-related value an actual OSNR corresponding to at least one of the operating conditions at which the two different performance values are respectively measured,

wherein the different operating conditions preferably correspond to different signal transmission powers on the optical link; and

wherein the method preferably further includes changing the signal transmission power on the optical link in order to provide said different operating conditions.

6. The method of any of the preceding claims, wherein the method further comprises decreasing the signal transmission power on the optical link if the OSNR margin is larger than a predefined margin value; and/or

   wherein the method further comprises increasing the signal transmission power on the optical link if the OSNR margin is smaller than a predefined margin value.

7. The method of any of the preceding claims, wherein the performance value corresponds to a value of a pre-forward error correction (FEC) bit error rate (BER) on the optical link; and/or

   wherein the OSNR-related value is determined by direct measurement of the actual OSNR on the optical link or calculated from link modelling; and/or

   wherein the required OSNR value is determined from the difference between a maximal auxiliary noise power value still allowing error free transmission of the optical signal over the optical link under the predefined relationship and the link-related equivalent power contribution.

8. The method of any of the preceding claims, wherein the method further comprises deriving one or more OSNR-related values, wherein each of the one or more OSNR-related values corresponds to or is at least indicative of the actual OSNR on the optical link for a respective given wavelength, and wherein each of the one or more OSNR-related values is based on at least two different performance values obtained for different operating conditions on the same optical link for the respective given wavelength;

   estimating a dependence of the OSNR-related values on a wavelength of the signal transmission on said optical link based on the one or more OSNR-related values; using said estimated dependence for deriving one or more estimated OSNR-related values, wherein the one or more estimated OSNR-related values correspond to or are at least indicative of the actual OSNR on the optical link for a wavelength other than said given wavelengths; and/or

   wherein the steps of the method are applied to one or more selected wavelengths or to one or more wavelength ranges.

9. An apparatus for determining contributions of different sources of signal degradation for optical signals transmitted over a given optical link in an optical transmission network, wherein the optical transmission network comprises a plurality of network elements and a plurality of optical links, wherein each optical link provides a connection between two network elements,

   wherein the apparatus comprises a processor (72) configured for receiving data from one or more measuring devices (76), wherein each of the one or more measuring devices (76) is connected to a given optical link of the optical transmission network, and wherein each measuring device (76) is configured for measuring a performance value of a signal transmission on said given optical link of the optical transmission network; and

   wherein the processor (72) is further configured for:

   measuring a performance value (P) of a signal transmission on said optical link, deriving, from the performance value, an auxiliary noise power value ($P_N$) based on a predetermined relationship between the performance value (P) and the auxiliary noise power value ($P_N$), wherein the auxiliary noise power value ($P_N$) comprises contributions of amplified spontaneous emission power ($P_A$) generated on the optical link and a link-related equivalent noise power contributions ($P_L$) representing other sources of signal degradation upon transmission on the optical link,

   measuring or deriving an OSNR-related value (Q) for the signal transmission on the optical link, wherein the OSNR-related value (Q) corresponds to or is at least indicative of an actual OSNR on the optical link, and

   distinguishing, based on the auxiliary noise power value ($P_N$) and on the OSNR-related value (Q) between noise power contributions of amplified spontaneous emission and link-related equivalent noise power contributions.

10. The apparatus of claim 9, wherein the processor (72) is further configured for determining the link-related equivalent noise power contribution ($P_L$) based on the auxiliary noise power value ($P_N$) and on the OSNR-related value (Q).

11. The apparatus of claim 9 or 10, wherein the processor (72) is further configured for:

    determining, based on the auxiliary noise power value ($P_N$) and on the OSNR-related value (Q), a required OSNR-related value that corresponds to or is at least indicative of a minimal OSNR that ensures successful data transmission on the optical link in view of said other sources of signal degradation represented by the link-related equivalent power contribution ($P_L$), and

determining the OSNR margin by subtracting the minimal OSNR from the actual OSNR indicated by the OSNR-related value (Q).

12. The apparatus of any of claims 9 to 11, wherein the apparatus further comprises one or more measuring devices (76), wherein each measuring device (76) is connected to an optical link of the optical transmission network, and wherein each measuring device (76) is configured for measuring a performance value of a signal transmission on said optical link of the optical transmission network, and wherein the one or more measuring devices (76) are connected to the processor (72), and wherein the processor (72) is configured for receiving data from the one or more measuring devices (76); and/or

wherein the apparatus further comprises a storage medium (74) comprising said predetermined relationship between the performance value and the auxiliary noise power value, wherein the predetermined relationship is an equipment specific relationship obtainable or obtained during manufacture of optical devices of the optical transmission network.

13. The apparatus of any of claims 9 to 12, wherein the processor (72) is further configured for determining the OSNR-related value based on at least two different performance values measured for different operating conditions on the same optical link; and/or

wherein the apparatus further comprises a control unit (78) connected to the optical transmission network and configured for controlling a power of signal transmission at each of the optical links, wherein the control unit (78) is preferably further configured for

decreasing the signal transmission power on a selected optical link if the OSNR margin estimated for said selected optical link is larger than a predefined margin value; and/or.

increasing the signal transmission power on said selected optical link if the OSNR margin is smaller than a predefined margin value

wherein the control unit (78) is preferably configured for decreasing and/or increasing said signal transmission power for one or more selected wavelengths or wavelength ranges.

14. The apparatus of any of claims 9 to 13, wherein the processor (72) is further configured for:

deriving one or more OSNR-related values, wherein each of the one or more OSNR-related values corresponds to or is at least indicative of the actual OSNR on the optical link for a respective given wavelength, and wherein each of the one or more OSNR-related values is based on at least two different performance values obtained for different operating conditions on the same optical link for the respective given wavelength;

estimating a dependence of the OSNR-related values on a wavelength of the signal transmission on said optical link based on the one or more OSNR-related values;

using said estimated dependence for deriving one or more estimated OSNR-related values, wherein the one or more estimated OSNR-related values correspond to or are at least indicative of the actual OSNR on the optical link for a wavelength other than said given wavelengths.

15. The apparatus of any of claims 9 to 14, wherein the one or more measuring devices (76) are further configured for measuring one or more of a BER, a power level, an OSNR, error-vector magnitude (EVM), span loss, amplifier gain, chromatic dispersion (CD), polarization mode dispersion (PMD), and polarization dependent loss (PDL) of the signal transmitted over the optical link; and/or

wherein the apparatus further comprises at least an optical spectrum analyzer (79) connected to at least one optical link, wherein the optical spectrum analyzer (79) is configured for measuring the OSNR-related value for signal transmission on said at least one optical link.

Fig. 1

EP 3 376 687 A1

Fig. 2

Fig. 3

Fig. 4

Fig. 5

Fig. 6

Fig. 7

Europäisches
Patentamt
European
Patent Office
Office européen
des brevets

# EUROPEAN SEARCH REPORT

**Application Number**

EP 17 16 1701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/330071 A1 (HE GANG [CA] ET AL) 12 December 2013 (2013-12-12) * paragraph [0003] - paragraph [0008]; claims 1-4,27; figure 2 * * paragraph [0057] - paragraph [0063] * * paragraph [0051] - paragraph [0052] * * paragraph [0083] * * paragraph [0122] * | 1-15 | INV. H04B10/079 |
| A | US 2013/028597 A1 (YE YABIN [DE] ET AL) 31 January 2013 (2013-01-31) * paragraph [0009] - paragraph [0011]; claims 1-5 * * paragraph [0039] - paragraph [0040] * * paragraph [0046] - paragraph [0055] * * paragraph [0126] * * paragraph [0145] - paragraph [0155] * * paragraph [0073] * | 1-15 | |
| A | US 2017/078017 A1 (DAHAN DAVID JIMMY [IL] ET AL) 16 March 2017 (2017-03-16) * the whole document * | 1-15 | |
| A | EP 1 180 861 A2 (MARCONI COMM SPA [IT]) 20 February 2002 (2002-02-20) * the whole document * | 1-15 | TECHNICAL FIELDS SEARCHED (IPC) H04B |

The present search report has been drawn up for all claims

| Place of search | Date of completion of the search | Examiner |
|---|---|---|
| Munich | 21 August 2017 | Gäde, Sebastian |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 17 16 1701

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2017

| Patent document cited in search report | | Publication date | Patent family member(s) | | Publication date |
|---|---|---|---|---|---|
| US 2013330071 | A1 | 12-12-2013 | CN | 103370890 A | 23-10-2013 |
| | | | EP | 2676384 A1 | 25-12-2013 |
| | | | US | 2013330071 A1 | 12-12-2013 |
| | | | WO | 2012109754 A1 | 23-08-2012 |
| US 2013028597 | A1 | 31-01-2013 | CN | 102652406 A | 29-08-2012 |
| | | | EP | 2569879 A1 | 20-03-2013 |
| | | | US | 2013028597 A1 | 31-01-2013 |
| | | | WO | 2012119364 A1 | 13-09-2012 |
| US 2017078017 | A1 | 16-03-2017 | GB | 2539123 A | 07-12-2016 |
| | | | US | 2017078017 A1 | 16-03-2017 |
| | | | WO | 2015132776 A1 | 11-09-2015 |
| EP 1180861 | A2 | 20-02-2002 | AT | 364264 T | 15-06-2007 |
| | | | AU | 6187601 A | 21-02-2002 |
| | | | DE | 60128756 T2 | 31-01-2008 |
| | | | EP | 1180861 A2 | 20-02-2002 |
| | | | IT | TO20000808 A1 | 18-02-2002 |
| | | | JP | 2002141868 A | 17-05-2002 |
| | | | NO | 20013999 A | 19-02-2002 |
| | | | RU | 2001123251 A | 27-06-2003 |
| | | | US | 2002044340 A1 | 18-04-2002 |
| | | | ZA | 200106216 B | 31-01-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013026469 A1

**Non-patent literature cited in the description**

- The GN Model of Non-Linear Propagation in Uncompensated Coherent Optical Systems. *Journal of Lightwave Technology,* 15 December 2012, vol. 30 (24